# EUROPÄISCHE PATENTSCHRIFT

(11) **EP 4 165 325 B1**
(45) Veröffentlichungstag und Bekanntmachung des Hinweises auf die Patenterteilung: **09.07.2025**
(21) Anmeldenummer: 21728827.3
(22) Anmeldetag: 20.05.2021
(51) Int. Cl.: F16H 57/04

(54) **GETRIEBE MIT EINER KÜHLANORDNUNG UND EINEM LÜFTER**
TRANSMISSION COMPRISING A COOLING ARRANGEMENT AND A FAN
TRANSMISSION COMPRENANT UN SYSTÈME DE REFROIDISSEMENT ET UN VENTILATEUR

(30) Priorität: 15.06.2020 CN 202010543094; 22.07.2020 DE 102020004409
(43) Veröffentlichungstag der Anmeldung: 19.04.2023
(73) Patentinhaber: SEW-EURODRIVE GmbH & Co. KG, 76646 Bruchsal (DE)
(72) Erfinder: WU, Zili, TIANJIN, 300060 (CN)
(86) Internationale Anmeldenummer: PCT/EP2021/025188
(87) Internationale Veröffentlichungsnummer: WO 2021/254657

(56) Entgegenhaltungen:
- EP-A2- 0 961 095
- WO-A1-2018/059980
- DE-A1- 102012 022 024
- JP-A- H 039 198

## Beschreibung

Die Erfindung betrifft ein Getriebe mit einer Kühlanordnung und einem Lüfter.

Es ist allgemein bekannt, dass ein Getriebe Verlustwärme erzeugt, wobei Reibverlustenergieen des Lagers und der miteinander im Eingriff stehenden Verzahnungen an das Schmieröl abgegeben werden.

Aus der EP 3 299 670 A1 ist ein Getriebe bekannt.

Aus der JP 2018 - 059 609 A ist ein Getriebe bekannt.

Aus der DE 10 2012 022 023 A1 ist ein Getriebe mit Gehäuseteil bekannt.

Aus der US 2011 / 0 179 903 A1 ist ein Getriebe mit Flüssigkeitskühlung bekannt.

Aus der GB 2 185 551 A ist ein Getriebemotor bekannt.

Aus der DE 10 2010 025 270 A1 ist eine Kühlanordnung für ein Getriebe bekannt.

Aus der JP H10 - 061 754 A ist ein luftgekühltes Getriebe bekannt.

Aus der JP H08 - 105 521 A ist ebenfalls ein luftgekühltes Getriebe bekannt.

Aus der DE 10 2012 022 024 A1 ist ein Getriebe mit Gehäuseteil und Lüfter bekannt.

Aus der US 2004 / 0 112 171 A1 ist ein Motorfahrzeug bekannt.

Aus der EP 3 343 070 A1 ist ein Motorfahrzeug mit Riementrieb bekannt.

**Aus der** WO 2018/059980 A1 **ist ein Getriebe mit Ringkühler bekannt.**

**Aus der** EP 0 961 095 A1 **ist ein Kühler bekannt.**

**Aus der** JP H03 9198 A **ist ein luftgekühltes Reduktionsgetriebe bekannt.**

Der Erfindung liegt daher die Aufgabe zugrunde, ein Getriebe mit einer Kühlanordnung und einem Lüfter weiterzubilden, wobei eine effiziente Entwärmung ausführbar sein soll.

Erfindungsgemäß wird die Aufgabe bei dem Getriebe nach den in Anspruch 1 angegebenen Merkmalen gelöst.

Wichtige Merkmale der Erfindung bei dem Getriebe sind, dass das Getriebe mit einer Kühlanordnung und einem Lüfter ausgebildet ist,
wobei der Lüfter drehfest verbunden ist mit einer ersten Welle des Getriebes, insbesondere mit einer eintreibenden Welle des Getriebes,
wobei die Kühlanordnung eine Kühlereinheit aufweist,
wobei die Kühlereinheit zumindest einen Kühler aufweist,
wobei ein vom Lüfter geförderter Luftstrom durch den Kühler strömt,
wobei ein von einer Pumpe geförderten Ölstrom durch den Kühler strömt.

Von Vorteil ist dabei, dass die Kühlanordnung am Getriebe vorgesehen ist und passiv betreibbar ist. Insbesondere ist die Pumpe passiv, also von einer Welle des Getriebes antreibbar, und der Lüfter ebenfalls passiv, also von einer Welle des Getriebes antreibbar.

Die Kühleinheit der Kühlanordnung weist Kühler auf und ist am Getriebe befestigbar. Dabei sind die Kühler zueinander identisch ausgebildet. Daher sind die Kühler in einer regelmäßigen polygonalen Anordnung vorsehbar, so dass der Mittelpunkt oder Schwerpunkt des Polygons auf der Drehachse des Lüfters angeordnet ist. Die zueinander jeweils nächstbenachbarten Kühler der Kühleinheit sind über ein jeweiliges Umlenkteil miteinander verbunden. Auf diese Weise ist ein Ölstrom in Umfangsrichtung um die Drehachse des Lüfters herum bewirkbar.

Hierzu münden die von Öl durchströmten Bereiche des jeweiligen Kühlers in die zum jeweiligen Kühler nächstbenachbarten Umlenkteile. Der vom Lüfter geförderte Luftstrom durchströmt einen Bereich eines jeweiligen Kühlers, insbesondere in axialer Richtung, also parallel zur Richtung der Drehachse des Lüfters.

Der vom Öl durchströmte Bereich des Lüfters und der von Luft durchströmte Bereich des Lüfters sind miteinander wärmeleitend verbunden. Somit ist ein Wärmefluss vom Öl über die beiden Bereiche des Kühlers zur Umgebungsluft hin bewirkbar. Das Öl wird somit gekühlt und kann dann wieder dem Getriebe zur Schmierung und Kühlung zugeführt werden.

Bei einer vorteilhaften Ausgestaltung ist die Pumpe als Wellenendpumpe ausgeführt. Von Vorteil ist dabei, dass die Pumpe passiv ausführbar ist.

Bei einer vorteilhaften Ausgestaltung saugt die Pumpe des Ölstroms aus dem Getriebesumpf des Getriebes Öl an und fördert dieses, insbesondere über ein Filter, durch den Kühler hin. Von Vorteil ist dabei, dass das Öl mittels der Kühlanordnung kühlbar ist und somit die Schmierung und Kühlung bewirkbar sind.

**Erfindungsgemäß** weist der Kühler einen ersten Bereich auf, der von Luft durchströmt wird, und einen zweiten Bereich, der von Öl durchströmt wird. Von Vorteil ist dabei, dass der Wärmestrom vom Öl an den Kühler und von dort an die Umgebungsluft abfließt.

**Erfindungsgemäß** weist der erste Bereich ein erstes Wellblech auf,
wobei der zweite Bereich ein zweites Wellblech aufweist,
insbesondere wobei die Wellrichtung des ersten Wellblechs senkrecht zur Wellrichtung des zweiten Wellblechs ist. Von Vorteil ist dabei, dass der Ölstrom und der Luftstrom senkrecht zueinander ausgerichtet sind.

Bei einer vorteilhaften Ausgestaltung sind im ersten Bereich zwei, senkrecht zur Wellrichtung und senkrecht zur Strömungsrichtung des den ersten Bereich durchströmenden Luftstroms voneinander beabstandete Abdeckteile angeordnet. Von Vorteil ist dabei, dass eine einfache Herstellung ermöglicht ist. Denn der von Luft durchströmte Bereich ist durch das erste Wellblech und die Abdeckteile in einfacher Weise begrenzt.

**Erfindungsgemäß** sind im zweiten Bereich zwei, senkrecht zur Wellrichtung und senkrecht zur Strömungsrichtung des den zweiten Bereich durchströmenden Ölstroms voneinander beabstandete Abdeckteile angeordnet. Von Vorteil ist dabei, dass eine einfache Herstellung ermöglicht ist. Denn der von Öl durchströmte Bereich ist durch das zweite Wellblech und die Abdeckteile in einfacher Weise begrenzt.

Bei einer vorteilhaften Ausgestaltung mündet der vom Öl durchströmte Bereich des Kühlers in ein Umlenkteil, in welches auch der vom Öl durchströmte Bereich eines weiteren Kühlers mündet. Von Vorteil ist dabei, dass eine einfache Umlenkung erreichbar ist.

Bei einer vorteilhaften Ausgestaltung ist das erste Wellblech zwischen einem ersten Abdeckteil des vom Öl durchströmten Bereichs und einem weiteren Abdeckteil eines weiteren vom Öl durchströmten Bereichs des Kühlers angeordnet. Von Vorteil ist dabei, dass eine einfache Herstellung des Ölkanals ausführbar ist.

Bei einer vorteilhaften Ausgestaltung weist der Kühler einen von Luft durchströmten Bereich zwischen dem ersten und dem weiteren von Öl durchströmten Bereich auf. Von Vorteil ist dabei, dass der von Luft durchströmte Bereich effizient nutzbar ist.

Bei einer vorteilhaften Ausgestaltung ist jeder von Öl durchströmte Bereich des Kühlers beidseitig von einem von Luft durchströmten Bereich des Kühlers angeordnet. Von Vorteil ist dabei, dass eine beidseitige Kühlung ermöglicht ist.

Bei einer vorteilhaften Ausgestaltung bilden die Kühler der Kühlereinheit eine polygonale Anordnung, insbesondere eine quadratische Anordnung,
insbesondere wobei der Mittelpunkt und/oder Schwerpunkt der Kühler der Kühlereinheit, also der durch die Kühler gebildeten polygonalen Anordnung, auf der Drehachse des Lüfters angeordnet ist. Von Vorteil ist dabei, dass der vom Lüfter geförderte Luftstrom gleichmäßig auf die als regelmäßiges Polygon und somit jeweils auf gleichem Radialabstand angeordneten Kühler verteilt wird. Die polygonale Anordnung ist dabei eine ebene Anordnung, wobei die Normalenrichtung der die ebene Anordnung enthaltenden Ebene parallel zur Drehachse des Lüfters ausgerichtet ist.

Bei einer vorteilhaften Ausgestaltung ist die Kühlereinheit an einem Gehäuseteil des Getriebes befestigt. Von Vorteil ist dabei, dass eine einfache Herstellung ermöglicht ist.

Bei einer vorteilhaften Ausgestaltung weist die Kühlanordnung ein Überdruckventil auf, bei dessen Öffnen der von der Pumpe geförderte Ölstrom direkt in den Innenraum des Getriebes abgeleitet wird. Von Vorteil ist dabei, dass bei Verstopfung der Kühlereinheit eine direkte Zuleitung des Öls in den Innenraum des Getriebes ausführbar ist.

Bei einer vorteilhaften Ausgestaltung weist die Kühlanordnung einen Flussregler, insbesondere zur Durchflusssteuerung, zum Steuern des von der Pumpe geförderten, zur Kühlereinheit strömenden Ölstroms auf. Von Vorteil ist dabei, dass eine temperaturabhängige Steuerung des Ölflusses ermöglicht ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein erfindungsgemäßes Getriebe mit einer Kühlanordnung dargestellt.
In der Figur 2 ist im Unterschied zur Figur 1 eine Lüftereinheit der Kühlanordnung explodiert dargestellt.
In der Figur 3 ist die Kühlanordnung selbst veranschaulicht.
In der Figur 4 ist der Kühler 21 in Schrägansicht dargestellt.
In der Figur 5 ist das Aufbauschema eines Teils des Kühlers 21 schematisch symbolisiert, wobei die geometrischen Dimensionen nicht mit Figur 4 übereinstimmen.
In der Figur 6 ist der Kühlkreislauf symbolisiert.

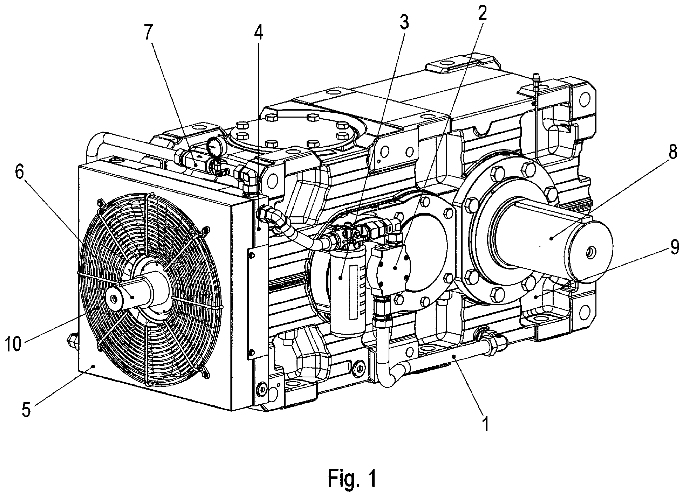

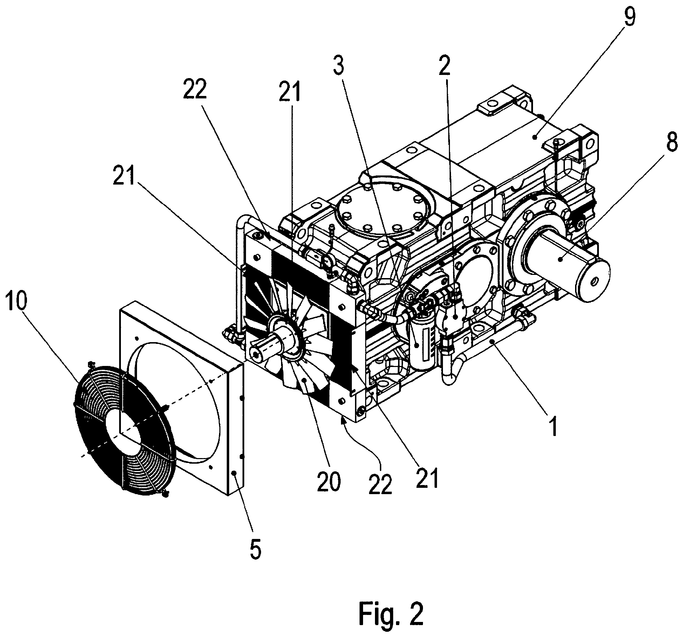

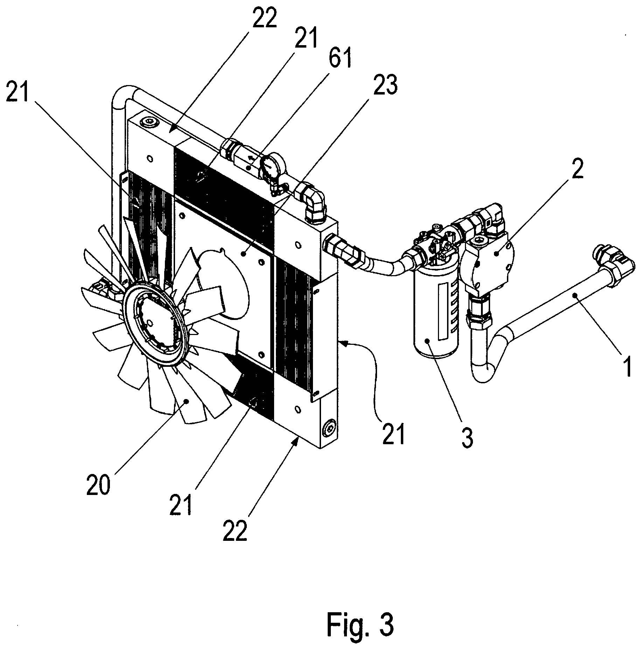

Wie in den Figuren 1 bis 4 gezeigt, weist das Getriebe ein Gehäuse mit einem Gehäuseteil 9 auf. Im Gehäuse sind Lager zur drehbaren Lagerung einer ersten Welle 6, insbesondere der eintreibenden Welle, angeordnet, wobei ein erstes Verzahnungsteil mit der ersten Welle drehfest verbunden ist.

Das erste Verzahnungsteil steht mit einem weiteren Verzahnungsteil im Zahneingriff. Die zweite, insbesondere abtreibende, Welle 8 des Getriebes ist ebenso über im Gehäuse aufgenommene Lager drehbar gelagert und ist drehfest verbunden mit einem letzten Verzahnungsteil des Getriebes.

Mit der ersten, insbesondere eintreibenden und somit schnell drehenden, Welle 6 ist ein Lüfter 20, der vorzugsweise als Axiallüfter ausgeführt ist, drehfest verbunden.

Am Gehäuse ist eine Kühlereinheit befestigt, welche insbesondere vier Kühler 21 aufweist, die als quadratische Anordnung vorgesehen sind. In Umfangsrichtung zwischen den Kühlern 21 sind Umlenkteile 22 angeordnet, in deren Innenraumbereiche jeweils das Öl führenden Kanäle der zum jeweiligen Umlenkteil 22 nächstbenachbarten, insbesondere also direkt angrenzenden, Kühler 21 münden.

Der von dem Lüfter 20 geförderte Luftstrom wird durch ein Schutzgitter 10 angesaugt und strömt dann insbesondere zumindest teilweise durch die insbesondere vier Kühler 21. Ein radial innerhalb der Kühler 21 angeordnetes Abdeckblech 23 verhindert Strömungsverluste, also Strömungsanteile, die nicht durch einen der Kühler 21 hindurchströmen.

Der Kühler 21 besteht jeweils aus Bereichen, durch welche Luft in axialer Richtung hindurchströmt und hierzu benachbarten anderen Bereichen, durch welche Öl senkrecht zur axialen Richtung durchströmt, insbesondere in einer jeweiligen tangentialen Richtung.

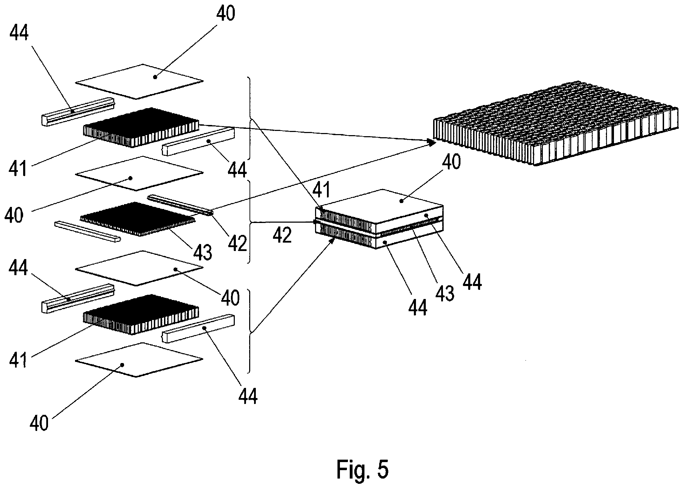

Der Aufbau des Kühlers 21 ist in Figur 5 näher dargestellt. Dabei ist beispielhaft ein von Öl durchströmbarer Bereich zwischengeordnet zwischen zwei von Luft durchströmbaren Bereichen.

Hierzu ist ein Stapel gebildet, welcher in Stapelrichtung aus einem Abdeckteil 40, einem Luftkühlteil 41, insbesondere welches als Wellblechteil ausgebildet ist, einem weiteren Abdeckteil 40, einem Ölkühlteil 43, insbesondere welches als Wellblechteil ausgebildet ist, einem Abdeckteil 40, einem Luftkühlteil 41, insbesondere welches als Wellblechteil ausgebildet ist, und einem weiteren Abdeckteil 40 gebildet ist.

An einander gegenüberliegenden Seiten des Ölkühlteils 43 sind Abdeckteile 42 angeordnet; an den zwei anderen, einander gegenüberliegenden Seiten der Luftkühlteile 41 sind andere Abdeckteile 44 angeordnet.

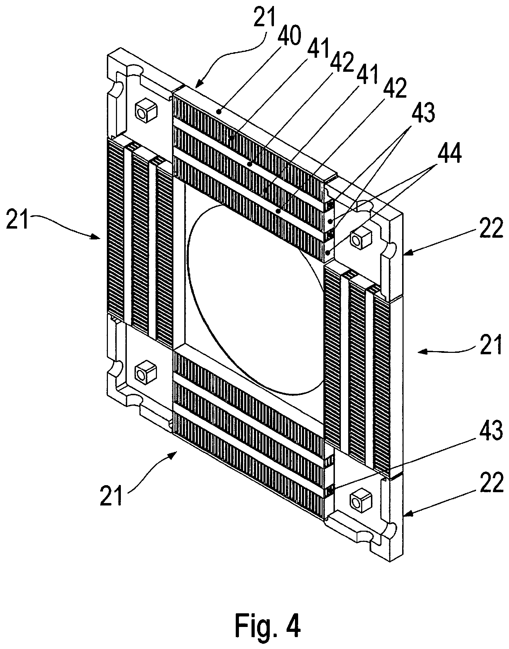

Wie in Figur 4 erkennbar ist, ist dieses Stapelprinzip weiter fortgesetzt mit einem weiteren von Öl durchströmbaren Bereich und einem daran sich anschließenden von Luft durchströmbaren Bereich, die wiederum entsprechend aufgebaut sind.

Insbesondere sind die Wellrichtungen der Wellbleche das Öl führenden Bereiche senkrecht zu den Wellrichtungen der Wellbleche der Luft führenden Bereiche.

Mittels einer Rohrleitung 1 fördert eine Pumpe 2, insbesondere von einer weiteren Welle des Getriebes angetriebenen Wellenendpumpe, Öl aus dem Ölsumpf des Getriebes zu einem Filter 3, von wo dann das Öl an ein Umlenkteil 22 gefördert wird, wo das Öl dann durch das Öl führenden Bereiche und weitere Umlenkteile 22 in - bezogen auf die Drehrichtung des Lüfters 20 - Umfangsrichtung und entgegen dieser Umfangsrichtung bis zu einem gegenüber liegenden Umlenkteil 22 gefördert wird. Dabei durchströmt das Öl die Kühler 21 und wird abgekühlt. Das so abgekühlte Öl wird dem vom Gehäuseteil 9 zumindest teilweise umgebenen Getriebeinnenraum zugeführt.

Falls Kühler 21 verstopft sind oder das Durchströmen durch einen Schalter eines Flussreglers 7 verhindert wird, baut sich ein Druck auf, der ein Überdruckventil 61 öffnet, so dass das unter Überdruck stehende Öl dem Getriebeinnenraum über eine weitere Rohrleitung zugeführt wird.

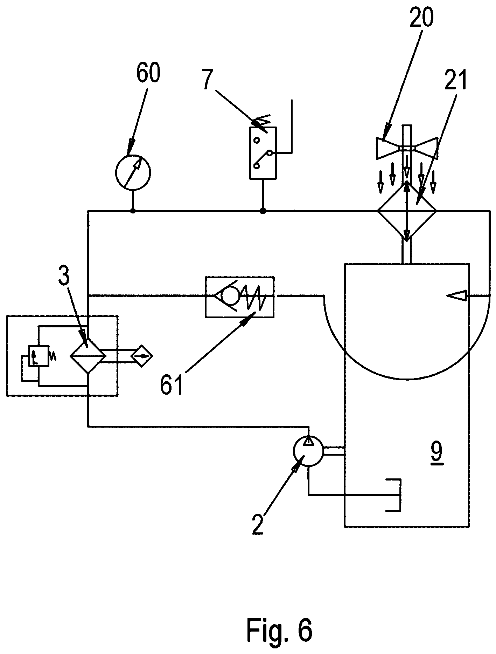

In Figur 6 ist der Ölkreislauf näher dargestellt. Dabei strömt das von der Pumpe 2 geförderte Öl durch das Filter 3, welches auch Funktionskontrollen aufweist, und fließt dann an einem Mittel 60 zur Erfassung des Drucks oder der Strömungsgeschwindigkeit vorbei zu einem Flussregler 7, insbesondere Duchflusssteuerung. Falls dieser offen ist, fließt das Öl weiter über die Kühler 21 in den Innenraum des Getriebes.

Falls jedoch der Flussregler 7 den Ölfluss stoppt, baut sich am Ausgang des Filters 3 ein derart hoher Druck auf, dass das Überdruckventil 61 öffnet und das Öl direkt zurück in das Getriebeinnere abgeleitet wird.

Das Schutzgitter 10 ist an einem Deckelteil 5 befestigt, welches die Kühleranordnung 4 abdeckt.

Wie in Figur 5 ersichtlich, ist das erste Wellblech des Luftkühlteils 41 in Stapelhöhenrichtung zwischen zwei Abdeckteilen 40 angeordnet,
insbesondere wobei die Abdeckteile 40 zwischen je einem Luftkühlteil 4 und einem Ölkühlteil 43 sowie als obere und untere Deckplatten des Kühlteilstapels vorgesehen sind, und in einer dazu quer verlaufenden Richtung zwischen zwei Abdeckteilen 44 angeordnet sind, die dem jeweiligen Luftkühlteil 41 zugeordnet sind,
insbesondere wobei jedem Ölkühlteil 43 ebenfalls je zwei Abdeckteile 42 zugeordnet sind, zwischen denen das jeweilige Ölkühlteil 43 angeordnet ist.

Außerdem ist das erste Wellblech in Stapelhöhenrichtung Zwischen zwei Abdeckteilen 40 angeordnet, die je ein Luftkühlteil 41 und ein Ölkühlteil 43 voneinander trennen oder einen oberen oder unteren Abschluss des Kühlteilstapels bilden.

Bei weiteren erfindungsgemäßen Ausführungsbeispielen wird zum Aufbau des Kühlers 21 das Stapelprinzip weiter fortgesetzt mit einem weiteren von Öl durchströmbaren Bereich und einem daran sich anschließenden von Luft durchströmbaren Bereich, die wiederum entsprechend aufgebaut sind. Statt einer quadratischen Anordnung von vier Kühlern 21 sind auch andere Anordnungen, insbesondere dreieckige, fünfeckige oder noch mehreckigere Anordnungen realisierbar. Die Umlenkteile 22 sind dann mit entsprechend gewinkelten Anschlussbereichen geformt. Vorteil einer höheren Anzahl von Ecken ist eine immer kreisförmigere und somit immer effizientere Wärmeabgabe an den durchströmenden Luftstrom.

### Bezugszeichenliste

1 Rohrleitung
2 Pumpe, insbesondere Wellenendpumpe
3 Filter
4 Kühleranordnung
5 Deckelteil
6 erste Welle, insbesondere eintreibende Welle des Getriebes
7 Flussregler, insbesondere Duchflusssteuerung
8 zweite Welle, insbesondere abtreibende Welle des Getriebes
9 Gehäuseteil
10 Schutzgitter
20 Lüfter, insbesondere Axiallüfter
21 Kühler
22 Umlenkteil
23 Abdeckblech
40 Abdeckteil
41 Luftkühlteil, insbesondere Wellblechteil
42 Abdeckteil
43 Ölkühlteil, insbesondere Wellblechteil
44 Abdeckteil
60 Mittel zur Erfassung des Drucks oder der Strömungsgeschwindigkeit
61 Überdruckventil

## Patentansprüche

1. Getriebe mit einer Kühlanordnung (4) und einem Lüfter (20),
wobei der Lüfter drehfest verbunden ist mit einer ersten Welle (6) des Getriebes, **nämlich** mit einer eintreibenden Welle des Getriebes,
wobei die Kühlanordnung eine Kühlereinheit, **nämlich** Kühleranordnung (4), aufweist,
wobei die Kühlereinheit zumindest einen Kühler (21) aufweist,
wobei ein vom Lüfter geförderter Luftstrom durch den Kühler strömt,
wobei ein von einer Pumpe (2) geförderter Ölstrom durch den Kühler strömt,
wobei der Kühler einen ersten Bereich aufweist, der von Luft durchströmt wird, und einen zweiten Bereich aufweist, der von Öl durchströmt wird,
**dadurch gekennzeichnet, dass**
der erste Bereich ein Luftkühlteil (41) aufweist und wobei der zweite Bereich ein Ölkühlteil (43) aufweist und wobei der Kühler als Kühlteilstapel ausgebildet ist,
wobei der erste Bereich ein erstes Wellblech aufweist,
wobei der zweite Bereich ein zweites Wellblech aufweist,
wobei die Wellrichtung des ersten Wellblechs senkrecht zur Wellrichtung des zweiten Wellblechs ist,
wobei im ersten Bereich zwei, senkrecht zur Wellrichtung und senkrecht zur Strömungsrichtung des den ersten Bereich durchströmenden Luftstroms voneinander beabstandete Abdeckteile (44) angeordnet sind,
wobei der Kühler einen von Luft durchströmten Bereich zwischen dem ersten und dem weiteren von Öl durchströmten Bereich aufweist,
**dadurch gekennzeichnet, dass**
im zweiten Bereich zwei, senkrecht zur Wellrichtung und senkrecht zur Strömungsrichtung des den zweiten Bereich durchströmenden Ölstroms voneinander beabstandete Abdeckteile (42) angeordnet sind, und dass das erste Wellblech in Stapelhöhenrichtung zwischen zwei dritten Abdeckteilen (40) angeordnet ist, die je ein Luftkühlteil (41) und ein Ölkühlteil (43) voneinander trennen oder einen oberen oder unteren Abschluss des Kühlteilstapels bilden.

2. Getriebe nach Anspruch 1,
**dadurch gekennzeichnet, dass**
die Pumpe als Wellenendpumpe ausgeführt ist.

3. Getriebe nach einem der vorangegangenen Ansprüche,
**dadurch gekennzeichnet, dass**
die Pumpe des Ölstroms aus dem Getriebesumpf des Getriebes Öl ansaugt und dieses, nämlich über ein Filter (3), durch den Kühler (21 hin fördert.

4. Getriebe nach einem der vorangegangenen Ansprüche,
**dadurch gekennzeichnet, dass**
der vom Öl durchströmte Bereich des Kühlers in ein Umlenkteil mündet, in welches auch der vom Öl durchströmte Bereich eines weiteren Kühlers mündet.

5. Getriebe nach einem der vorangegangenen Ansprüche,
**dadurch gekennzeichnet, dass**
das erste Wellblech des Luftkühlteils (41) in Stapelhöhenrichtung zwischen zwei **ersten** Abdeckteilen (40) angeordnet ist,
insbesondere wobei die **ersten** Abdeckteile (40) zwischen je einem Luftkühlteil (41) und einem Ölkühlteil (43) sowie als obere und untere Deckplatten des Kühlteilstapels vorgesehen sind, und in einer dazu quer verlaufenden Richtung zwischen zwei **zweiten** Abdeckteilen (44) angeordnet sind, die dem jeweiligen Luftkühlteil (41) zugeordnet sind,
insbesondere wobei jedem Ölkühlteil (43) ebenfalls je zwei **dritten** Abdeckteile (42) zugeordnet sind, zwischen denen das jeweilige Ölkühlteil (43) angeordnet ist.

6. Getriebe nach einem der vorangegangenen Ansprüche,
**dadurch gekennzeichnet, dass**
jeder von Öl durchströmte Bereich des Kühlers beidseitig von einem von Luft durchströmten Bereich des Kühlers angeordnet ist.

7. Getriebe nach einem der vorangegangenen Ansprüche,
**dadurch gekennzeichnet, dass**
die Kühler der Kühlereinheit eine polygonale Anordnung bilden, insbesondere eine quadratische Anordnung.

8. **Getriebe nach Anspruch 7,**
**dadurch gekennzeichnet, dass**
**der** Mittelpunkt und/oder Schwerpunkt der Kühler (21) auf der Drehachse des Lüfters angeordnet ist.

9. Getriebe nach einem der vorangegangenen Ansprüche,
**dadurch gekennzeichnet, dass**
die Kühlereinheit an einem Gehäuseteil des Getriebes befestigt ist.

10. Getriebe nach einem der vorangegangenen Ansprüche,
**dadurch gekennzeichnet, dass**
die Kühlanordnung ein Überdruckventil aufweist, bei dessen Öffnen der von der Pumpe geförderte Ölstrom direkt in den Innenraum des Getriebes abgeleitet wird.

11. Getriebe nach einem der vorangegangenen Ansprüche,
**dadurch gekennzeichnet, dass**
die Kühlanordnung einen Flussregler, insbesondere zur Durchflusssteuerung, zum Steuern des von der Pumpe geförderten, zur Kühlereinheit strömenden Ölstroms aufweist.

## Claims

1. A gear unit having a cooling arrangement (4) and a fan (20),
wherein the fan is connected non-rotatably to a first shaft (6) of the gear unit, namely to an input shaft of the gear unit,
wherein the cooling arrangement comprises a cooler unit, namely cooler arrangement (4),
wherein the cooler unit comprises at least one cooler (21),
wherein an air stream conveyed by the fan flows through the cooler,
wherein an oil stream conveyed by a pump (2) flows through the cooler,
wherein the cooler comprises a first region through which air flows, and comprises a second region through which oil flows,
**characterised in that**
the first region comprises an air cooling part (41) and wherein the second region comprises an oil cooling part (43) and wherein the cooler is formed as a stack of cooling parts,
wherein the first region comprises a first corrugated sheet,
wherein the second region comprises a second corrugated sheet,
wherein the direction of corrugation of the first corrugated sheet is perpendicular to the direction of corrugation of the second corrugated sheet,
wherein two covering parts (44) spaced apart from each other perpendicularly to the direction of corrugation and perpendicularly to the direction of flow of the air flow flowing through the first region are arranged in the first region,
wherein the cooler comprises a region through which air flows between the first and the further region through which oil flows,
**characterised in that**
two covering parts (42) spaced apart from each other perpendicularly to the direction of corrugation and perpendicularly to the direction of flow of the oil stream flowing through the second region are arranged in the second region,
and **in that**
the first corrugated sheet in the vertical stack direction is arranged between two third covering parts (40) which separate an air cooling part (41) and an oil cooling part (43) in each case from each other or form an upper or lower closure of the stack of cooling parts.

2. A gear unit according to claim 1,
**characterised in that**
the pump is embodied as a shaft end pump.

3. A gear unit according to one of the preceding claims,
**characterised in that**
the pump of the oil stream draws oil out of the gear-unit sump of the gear unit and conveys it, namely by way of a filter (3), through the cooler (21).

4. A gear unit according to one of the preceding claims,
**characterised in that**
that region of the cooler through which the oil flows opens into a deflecting part into which that region of a further cooler through which the oil flows also opens.

5. A gear unit according to one of the preceding claims,
**characterised in that**
the first corrugated sheet of the air cooling part (41) is arranged in the vertical stack direction between two first covering parts (40),
in particular with the first covering parts (40) being provided between one air cooling part (41) and one oil cooling part (43) in each case and also as upper and lower cover plates of the stack of cooling parts, and in a direction running transversely thereto being arranged between two second covering parts (44) which are associated with the respective air cooling part (41),
in particular with likewise two third covering parts (42) in each case being associated with each oil cooling part (43), between which covering parts the respective oil cooling part (43) is arranged.

6. A gear unit according to one of the preceding claims,
**characterised in that**
each region of the cooler through which oil flows is arranged on either side of a region of the cooler through which air flows.

7. A gear unit according to one of the preceding claims,
**characterised in that**
the coolers of the cooler unit form a polygonal arrangement, in particular a square arrangement.

8. A gear unit according to claim 7,
**characterised in that**
the midpoint and/or centre of gravity of the coolers (21) is arranged on the axis of rotation of the fan.

9. A gear unit according to one of the preceding claims,
**characterised in that**
the cooler unit is fastened to a housing part of the gear unit.

10. A gear unit according to one of the preceding claims,
**characterised in that**
the cooling arrangement comprises a pressure relief valve, upon the opening of which the oil stream conveyed by the pump is discharged directly into the interior of the gear unit.

11. A gear unit according to one of the preceding claims,
**characterised in that**
the cooling arrangement comprises a flow controller, in particular for throughflow control, for controlling the oil stream conveyed by the pump and flowing to the cooler unit.

## Revendications

1. Transmission comportant un agencement de refroidissement (4) et un ventilateur (20), dans laquelle le ventilateur est solidaire en rotation d'un premier arbre (6) de la transmission, à savoir d'un arbre menant de la transmission,
dans laquelle l'agencement de refroidissement présente une unité de radiateurs, à savoir un agencement de radiateurs (4),
dans laquelle l'unité de radiateurs présente au moins un radiateur (21),
dans laquelle un flux d'air refoulé par le ventilateur s'écoule à travers le radiateur,
dans laquelle un flux d'huile refoulé par une pompe (2) s'écoule à travers le radiateur,
dans laquelle le radiateur présente une première zone traversée par l'air et présente une deuxième zone traversée par l'huile,
**caractérisée en ce que**
la première zone présente une partie de refroidissement par air (41) et la deuxième zone présente une partie de refroidissement par huile (43) et le radiateur est réalisé sous la forme d'un empilement de parties de refroidissement,
dans laquelle la première zone présente une première tôle ondulée,
dans laquelle la deuxième zone présente une deuxième tôle ondulée,
dans laquelle la direction d'ondulation de la première tôle ondulée est perpendiculaire à la direction d'ondulation de la deuxième tôle ondulée,
dans laquelle deux parties de recouvrement (44) espacées l'une de l'autre, perpendiculaires à la direction d'ondulation et perpendiculaires à la direction d'écoulement du flux d'air s'écoulant à travers la première zone, sont disposées dans la première zone,
dans laquelle le radiateur présente une zone traversée par l'air entre la première zone et l'autre zone traversée par l'huile,
**caractérisée en ce que**
deux parties de recouvrement (42) espacées l'une de l'autre, perpendiculaires à la direction d'ondulation et perpendiculaires à la direction d'écoulement du flux d'huile s'écoulant à travers la deuxième zone, sont disposées dans la deuxième zone,
et **en ce que** la première tôle ondulée est disposée dans la direction de hauteur d'empilement entre deux troisièmes parties de recouvrement (40) qui séparent respectivement une partie de refroidissement par air (41) et une partie de refroidissement par huile (43) ou qui forment une terminaison supérieure ou inférieure de l'empilement de parties de refroidissement.

2. Transmission selon la revendication 1,
**caractérisée en ce que**
la pompe est réalisée sous la forme d'une pompe d'extrémité d'arbre.

3. Transmission selon l'une des revendications précédentes,
**caractérisée en ce que**
la pompe du flux d'huile aspire l'huile à partir du carter de transmission de la transmission et la refoule à travers le radiateur (21), à savoir à travers un filtre (3).

4. Transmission selon l'une des revendications précédentes,
**caractérisée en ce que**
la zone du radiateur traversée par l'huile débouche dans une partie de déviation, dans laquelle débouche également la zone traversée par l'huile d'un autre radiateur.

5. Transmission selon l'une des revendications précédentes,
**caractérisée en ce que**
la première tôle ondulée de la partie de refroidissement par air (41) est disposée dans la direction de hauteur d'empilement entre deux premières parties de recouvrement (40),
en particulier dans laquelle les premières parties de recouvrement (40) sont prévues chaque fois entre une partie de refroidissement par air (41) et une partie de refroidissement par huile (43), ainsi que comme plaques de recouvrement supérieure et inférieure de l'empilement de parties de refroidissement, et sont disposées dans une direction transversale à celui-ci entre deux deuxièmes parties de recouvrement (44) qui sont associées à la partie de refroidissement par air (41) respective,
en particulier dans laquelle deux troisièmes parties de recouvrement (42) sont également associées à chaque partie de refroidissement par huile (43), entre lesquelles est disposée la partie de refroidissement par huile (43) respective.

6. Transmission selon l'une des revendications précédentes,
**caractérisée en ce que**
chaque zone du radiateur traversée par l'huile est disposée de part et d'autre d'une zone du radiateur traversée par l'air.

7. Transmission selon l'une des revendications précédentes,
**caractérisée en ce que**
les radiateurs de l'unité de radiateurs forment un agencement polygonal, en particulier un agencement carré.

8. Transmission selon la revendication 7,
**caractérisée en ce que**
le centre et/ou le centre de gravité des radiateurs (21) est disposé sur l'axe de rotation du ventilateur.

9. Transmission selon l'une des revendications précédentes,
**caractérisée en ce que**
l'unité de radiateurs est fixée à une partie carter de la transmission.

10. Transmission selon l'une des revendications précédentes,
**caractérisée en ce que**
l'agencement de refroidissement présente une soupape de surpression dont l'ouverture permet de dériver directement le flux d'huile refoulé par la pompe dans l'espace intérieur de la transmission.

11. Transmission selon l'une des revendications précédentes,
**caractérisée en ce que**
l'agencement de refroidissement présente un régulateur de flux, en particulier pour la commande de débit, pour commander le flux d'huile refoulé par la pompe et s'écoulant vers l'unité de radiateurs.
